# EUROPEAN PATENT SPECIFICATION

(11) **EP 1 943 298 B1**
(45) Date of publication and mention of the grant of the patent: **10.04.2013**
(21) Application number: 06799468.1
(22) Date of filing: 26.09.2006
(51) Int. Cl.: C08J 7/04, C08J 3/20

(54) **PROCESS FOR THE COATING OF POLYMER PARTICLES**
VERFAHREN ZUM BESCHICHTEN VON POLYMERTEILCHEN
PROCEDE DE REVETEMENT DE PARTICULES POLYMERES

(30) Priority: 26.09.2005 NL 1030033
(43) Date of publication of application: 16.07.2008
(73) Proprietor: DSM IP Assets B.V., 6411 TE Heerlen (NL)
(72) Inventor: BREMER, Leonardus, Gerardus, Bernardus, B-4600 Vise (BE)
(74) Representative: van der Ploeg, Antonius Franciscus M.J.
(86) International application number: PCT/NL2006/000479
(87) International publication number: WO 2007/035094

(56) References cited:
- WO-A-03/087198
- US-A- 4 517 246
- US-A- 4 960 617
- US-A- 5 041 310

## Description

The invention relates to a process for the coating of polymer particles, comprising the contacting of the objects with a composition that comprises an additive, a film-forming binder and optionally a distributing agent, and the formation and consolidation of an additive-containing binder layer on the surface of the objects.

Such a process is known from WO 03/087198, in which a solution or dispersion of the additive and the binder are contacted with the polymer particles by spraying the dispersion, for instance via a nozzle or with the aid of a propellant. After that, a liquid is sprayed that has a cleaning effect on the spraying system in the presence of the plastic pellets. Although uniformly coated plastic particles can be obtained with this known process, during pneumatic transport, for instance, it is found that the mechanical load on the particles may be so high that all or part of the coating may be released from the polymer pellets.

It is the aim of the invention to provide a process for the coating of polymer particles that yields a coating that is better resistant to mechanical forces than the known one

This aim is achieved according to the invention in that the process for the coating of polymer particles is a process according to claim 1. It has been found that the coating thus applied has been bonded very firmly to the polymer particles and that in many cases even a mixed binder-polymer boundary layer has formed on the outer surface of the polymer particles.

Consolidation of the mixture of binder and additive is here understood to be bringing the layer of the mixture on the particles in such a condition that the particles no longer stick together and the layer no longer comes off on the walls.

If no distributing agent is present is in the mixture, consolidation may for instance be effected by cooling the binder to below its softening temperature T_{b} or by reactions taking place in the binder, for instance polymerization. This can be realized, after the time needed to effect uniform distribution of the binder-additive mixture over the particles, by lowering the temperature in the container, for instance by blowing in cooling gas, for instance air or nitrogen. Cooling of the particles can also take place as a result of the contact with the colder wall.

If a distributing agent is present in the mixture, consolidation can be effected by evaporation of the distributing agent, which generally causes the softening temperature of the binder-distributing agent mixture to increase, possibly in combination with or followed by the above-mentioned measures for consolidation of the binder if no distributing agent is present.

The binder can be dispersed or emulsified or also dissolved in the distributing agent. The glass transition temperature of the binder in the mixture or solution will generally be lower than that of the binder, T_{b}, by itself. Upon removal of the distributing agent, the actual T_{b} will increase to the T_{b} of the binder itself when all the distributing agent has been removed. It has been found that the presence of a small amount of distributing agent or solvent in the binder is already sufficient to reduce the T_{b}. This makes it possible to still use binders having a T_{b} that is higher than the Tₚ of the material to be coated.

The distributing agent can also serve as solvent for the binder.

The process is carried out a temperature at which the binder can form a film. This temperature can be determined for each binder, whether or not mixed with a distributing agent, according to ASTM standard D2354. Equipment needed for carrying out this test method is commercially available, for instance the MFFT Bar of Rhopoint Instruments Ltd.

It has been found that at such a temperature the binder or the binder-distributing agent combination is uniformly spread out over the particles to be coated when they come into contact with each other and an additive-containing binder film is formed.

Preferably the temperature during removal of the distributing agent is at least 5 °C below Tₚ. This ensures that the polymer particles retain their shape and firmness so that upon the mutual contacts of the particles, which occur as a result of their mutual motion, sufficient force is exerted on the softer binder-containing composition for uniform distribution of the latter over the outer surface of the polymer particles. For amorphous polymers the glass transition temperature is used as the softening temperature Tₚ of the polymer and for semi-crystalline and crystalline polymers the melting point, determined by means of DSC with a heating rate of 10°C per minute, is used as this temperature.

It is also preferred for the temperature during removal of the distributing agent to be at least 5 °C above the softening temperature of the binder, T_{b}, but to be lower than Tₚ. This ensures that, also when the greater part of the distributing agent has been removed and the viscosity of the binder starts to play an important role in the distribution of the composition over the surface of the polymer particles, the binder is soft enough to be regularly distributed over the surface of the polymer particles by the forces that occur upon the mutual contacts between said particles.

In many cases the binder also softens due to absorption of distributing agent. For this reason the process can also be carried out when the binder has a softening temperature that is higher than the temperature at which the process is carried out, provided that it is ensured that distributing agent remains present for a sufficiently long time to keep the binder sufficiently soft so that it can be distributed regularly over the particle surface upon the mutual contacts between the polymer particles. This can be achieved by adding more distributing agent or by discharging the vapour from the distributing agent less rapidly. Suitable conditions can simply be found experimentally.

In the process according to the invention polymer particles are coated. These particles can and will as a rule be pellets, as used as feed for extruders and other polymer-processing equipment, but if desired also larger particles or even objects can be coated with the process according to the invention. Examples of suitable polymers that, often mixed with additives, are processed are thermoplastic polymers such as polyolefins, polyesters, polyamides, polycarbonate, acrylonitrile-butadiene-styrene polymer, polyacetals and polystyrene.

The polymer particles are contacted with a composition comprising an additive, a film-forming binder that is miscible with the polymer, and a distributing agent.

The process is suitable for the customary additives, examples of which are colorants, lubricants, blowing agents, pigments, dyes, antioxidants, thermal and UV stabilizers, antistatics, anti-blocking agents, release agents and flame retardants. In particular, the process is suitable for coating with colorants such as pigments and dyes because a uniform distribution of these in the coating is very important for obtaining uniformly coloured objects when the polymer pellets are processed and because the release of colorants during treatment and transport is very annoying. In the composition one or more additives may be present.

Suitable film-forming binders are those substances from which a coherent thin layer can be obtained by solution, dispersion or melt processing. Examples are oligomers and polymers.

An extra requirement to be met by the binder in the composition that is used in the process according to the invention is that it must be miscible with the polymer of the particles.

A binder is considered to be miscible in the framework of the invention if it passes at least one of the following tests.

In a first test equal amounts of polymer and dried binder are mixed in the melt in a kneader or extruder. A sample of the resulting mixture is placed in a standard DSC pan and heated in a DSC apparatus at a heating rate of 10 °C per minute. If a single glass transition temperature peak is visible in the heating curve, situated between the corresponding values of the binder and the polymer by themselves, then the binder is considered to be miscible with the polymer.

If a polymer-binder combination cannot be considered to be miscible according to the above test, it can be subjected to the following test.

A quantity of a dispersion or solution of the binder as intended for use in the process according to the invention is mixed with an equal amount of polymer powder, for instance obtained by cryogenic, milling, and placed in a DSC pan. Next, the combined material is heated to Tₚ in a DSC apparatus, with evaporation of the distributing agent. Binder and polymer are also considered to be miscible in the framework of the invention if the glass transition temperature of the binder, as measured in the second heating curve, has been increased due to the heating together with the polymer by at least 5% of the difference between the values of the glass transition temperature of the binder and the polymer by themselves.

Although the glass transition temperatures of most binder materials and polymer are known by themselves, these can if desired be determined separately by means of separate DSC scans.

It has been found that when the binder is miscible with the polymer, the process according to the invention yields a boundary layer between binder and polymer that gives very good adhesion of the binder layer to the pellets. As a rule, this boundary layer has a thickness of at least 0.1 µm, in which both binder and polymer are present.

The composition further contains a distributing agent. The distributing agent is chosen so, in conjunction with the binder and the additive or additives, is such that these components can form a stable dispersion therein, optionally with application, known by itself, of a dispersing agent. Preferably no or a minimal quantity of dispersing agent is added because its presence in the coating of the polymer pellets may have an undesirable influence on the properties of the polymer in the pellets and on those of the objects eventually made from these. To minimize the optionally required quantity of a dispersing agent, it is advantageous for the binder to possess lyophilic groups.

The quantities of binder and additive that are contacted via the composition with a certain quantity of polymer particles are chosen so that the coating of the polymer particles has a desired thickness and a desired additive and binder content. In practice, the proportion of the sum of additive and binder relative to the total of additive, binder and polymer particles lies between 0.001 and 5 wt.% and preferably between 0.001 and 3 or even 1 wt.%. The lower limit is determined by the minimally desired proportion of additive, while the upper limit is determined by the maximum allowable amount of binder in connection with its possible adverse influence on the polymer's properties. The binder : additive ratio as a rule lies between 1 : 10 and 10 : 1, with the relative amount of binder preferably being limited to what is necessary for realizing good encapsulation of the additive in the coating layer and adequate dispersion of the additives after processing of the polymer. As a rule, ratios around 1 : 1 suffice.

Since the coating layer thickness will typically be between 1 and 10 µm at the defined proportion of the coating relative to the polymer and at a customary pellet size of 0.5 to 5 mm, the size of at least 90% of the additive particles in the coating is preferably lower than 10 µm and more preferably lower than 5 µm. If the additive particles do not dissolve in the distributing agent, the additive is preferably added to the distributing agent in the desired size. If they do dissolve, bigger particles can be started from, which will as a result of dissolution automatically be reduced in size or even be reduced to molecular level.

For this reason, the size of the binder particles in the composition can be chosen within wider limits than that of a non-dissolving additive. An upper limit is defined by the requirement that the binder particles must form a stable dispersion in the distributing agent, optionally wile applying an allowable quantity of dispersing agent. Another requirement, which as a rule is less strict, is imposed by the size of the polymer particles. To achieve effective spreading of the binder above its softening temperature over the polymer particles, the size of the binder particles is preferably at most 50% and more preferably at most 30% of the size of the polymer particles.

If the binder is soluble in the distributing agent, bigger binder particles can be used in the composition for the reasons stated above for the additive.

The binder is preferably inert relative to the additive, so that the additive still possesses the desired properties in the coating. Binder and additive may be separately present in the composition, but it is also possible for the additive to have already been incorporated into the binder. The latter is advantageous because as a rule then less dispersing agent is needed for obtaining a stable dispersion in the composition and a reduction of the required quantity of distributing agent becomes possible.

The composition is contacted with the polymer particles and the distributing agent is removed, so that a layer of additive-containing binder is left on the particles. This contacting can for instance take place by pouring or spraying the composition over the particles in a container or by otherwise moistening the particles with the composition. This can be done in steps, with each time a portion of the composition being supplied to the particles and, after removal of the distributing agent, for instance through evaporation, a next portion and so on until the total quantity of composition has been supplied. The particles may already have been given the desired temperature before being contacted with the composition, with the heat present in the particles causing evaporation of the distributing agent. In addition, extra heat can be supplied, for instance by means of hot air or by heat radiation, to accelerate evaporation.

During removal of the distributing agent the particles are kept in mutual motion, with the particles also being contacted again and again with that portion of the composition, this being a liquid, that may have dripped off from the particles. In this way the total composition and the quantities of additive and binder present in it is applied to the particles, while moreover sticking together of the particles is prevented. The composition present on the particles can be sticky on account of the presence of a quantity of distributing agent that is still larger than allowable and on account of the presence of the binder at a temperature above its softening temperature.

The process is carried out at a temperature at which the binder can form a film. This temperature can be determined for every binder, whether or nor mixed with a distributing agent, according to ASTM standard D2354. Equipment needed for carrying out this test method is commercially available, for instance the MFFT Bar of Rhopoint Instruments Ltd.

It has been found that the mechanical effect of the mutual contacts between the polymer particles as a result of their mutual motion at such a temperature causes the binder of the binder-distributing agent combination to be uniformly spread over the particles to be coated when they come into contact with each other and an additive-containing binder film is formed.

One of the steps in the process according to the invention is the consolidation of the additive-containing binder layer on the pellets. This is understood to mean that the stickiness of this layer is reduced to such an extent that the pellets adhere to one another at most with such a small force that a small mechanical load such as shaking or stirring will cause them to separate. Such a small mechanical load may for instance be the pouring into or out of a packaging or the filling of a storage drum or the discharge from it.

Only when the binder layer has been consolidated, is the keeping in motion of the particles stopped and are the coated particles removed from the space in which coating has taken place. The mutual adherability of the coated particles can be reduced in several ways during the process. One possibility is evaporation of so much of distributing agent that the softening temperature of the binder composition used becomes higher than the temperature of the pellets. Another possibility is to reduce the temperature of the pellets to below the softening temperature of the binder composition. If the binder is soluble in the polymer, the polymer of the particles will partly start to dissolve in the binder so that the softening temperature of the binder will rise. In another embodiment use is made of a reactive binder of which the adherability improves due to polymerization occurring between binder molecules or between binder molecules and the polymer. Depending on the method chosen to consolidate the layer, the solvent is removed before, during or after said consolidation. A contribution to said removal is made by the increased temperature at which the composition is contacted and by the optional gas or air stream with which the composition is supplied or with which optionally a fluid bed is maintained.

The particles can be kept in motion in known ways. Examples are the maintaining of a fluid bed, with air or an inert gas, if desired heated to the chosen temperature, being blown through the particles from the bottom upward. Together with the air optionally also the composition used for coating can be supplied, but this composition can also be supplied separately from the top or from the side. Preferably the particles are kept in motion by means of stirring gear, which is then preferably cooled to a temperature below the softening temperature T_{b} of the binder.

When a consolidated layer of the binder with the additive in it has formed on the particles, this layer may still have some tendency to bond the particles to each other. As a rule, however, the particles then no longer come off on smooth surfaces (metal, glass or ceramics) of the equipment.

After the stickiness of the particles has decreased to an acceptable level, for instance according to one of the above-mentioned ways, the keeping in motion can be stopped and the temperature can be reduced. It has been found that stopping of the mutual motion when the temperature has dropped to the region of T_{b}, for instance to about 5 °C above it, only leads to such mild mutual sticking that a small mechanical load, for instance shaking or gentle stirring, is enough to separate the particles again. This is even the case when the binder layer still contains at most 10, 5 or 2 wt. % of the distributing agent. The allowable temperature and moisture content depend on the combination of distributing agent and binder but can simply be determined experimentally.

As softening temperature T_{b} of the binder the glass transition temperature is used if the binder is an amorphous polymer and preferably the melting temperature if the binder is a semi-crystalline or crystalline polymer. If the binder dissolves in the distributing agent, the temperature at the start should be above the dissolution temperature of the binder in the distributing agent. As the distributing agent is being removed, the increase in concentration will cause this dissolution temperature to increase and at a certain minimum concentration the binder's glass transition temperature or melting point will become decisive. When use is made of a solution of the binder in a distributing agent, the temperature of the particles will therefore always have to be higher than the temperature that is relevant at that moment in order to keep the binder in a condition that allows of spreading and distribution over the moving particles. At the start of the distributing agent removal process this is the dissolution temperature, and at the end it is the said softening temperature. To prevent fouling of the wall and of any stirring gear used, the wall temperature preferably always is lower than the temperature of the particles and the temperature of the composition, which are in principle the same.

The binder is selected in such a way that it can still be mixed homogenously with the polymer in a melting process after coating application. Preferably the binder therefore is a thermoplastic polymer and no or only little crosslinking takes place during the coating process.

The binders are selected in conjunction with the polymer of the particles and must meet the requirement that they are miscible with this polymer. In addition, the binder, as already stated before, must be capable of forming a film while it should not have any undesirable influence on the additive to be applied, either.

Examples of suitable binders for application of an additive-containing coating with the process according to the invention on polyamides, polyesters and polyethers are polyoxazolines such as Aquasol ® of Polymer Innovations Inc. and resins prepared by polymerization of monomers with two reactive groups chosen from: alcohols, carboxylic acids, amines or isocyanates. At least a part of the monomers applied should have sufficient affinity for the distributing agent to enable emulsification or dissolution of the binder. Suitable examples of such binders are polyethers such as polyethylene oxide, polypropylene oxide and combinations of these. It is also possible to add substances after the polymerization that have affinity for both the resin and the distributing agent. Examples are block copolymers with a polyethylene oxide block that has affinity for the distributing agent water. By using isocyanates it is possible to have the polymerization take place only partially by blocking off these groups. This has the advantage that the binder is of lower molecular weight when being applied and is thus easier to distribute over the pellets while being able to polymerize further after coating and even to enter into bonds with the coated polymer, as a result of which mixing improves and the pellets are no longer sticky.

Neoxil 0010 ® (DSM) has been found to be particularly suitable for the coating of polycarbonate pellets and differently shaped objects thereof and for polyesters. After processing of pellets coated with this, the polymer is found to have fully retained its clarity.

Suitable binders for application of an additive-containing coating using the process according to the invention on polyolefins are emulsions of modified polyolefins, preferably oxidized or grafted with lyophilic groups, EVA or PVA, optionally mixed with emulsions of polyester, polyurethane or epoxy resins, such as for instance obtainable under the Neoxil ® brand name (DSM) to obtain a better mechanical strength of the coating. Emulsions of LLDPE are also suitable because this material has a lower melting point than most other polyolefins. As further binders those which are prepared by means of emulsion polymerization, such as polystyrene and polybutadiene, are highly suitable because they are directly available as an emulsion. Addition of a wetting agent such as one of the Silwet ® additives (Crompton) or one of the additives of Byk Chemie, forming part of the group Byk 331 through 348, gives better wetting of the pellets when use is made of hydrophobic polymers such as polyolefins or styrene polymers.

Styrene polymers such as polystyrene, HIPS, ABS can be coated with the same binders as polyolefins. A solution of polyvinylpyrolidon in water has been found to be particularly suitable for the coating of nylon-6 pellets. The invention will be illustrated by the following examples without being restricted thereto.

The following tests have been performed on the coated pellets and on the mixer;
● Observation of the fouling of the mixer, drum and agitator
● Ease of cleaning the mixer with water. A damp cloth is rubbed over a small part of the surface inside the mixer and the surface and cloth are observed.
● Fouling of the mixer after repeated coating cycles without cleaning
● Mechanical strength of the coated pellets. Pellets in a metal tin are hit with a hammer and the surface of the tin and hammer are observed.
● Injection molding of the samples into test plates. The homogeneity of the color is tested and the color is compared with test plates made from pellets prepared by extrusion.

### Example 1

An Eirich mixer with a heated rotating drum (42 rpm) and an agitator (450 rpm) is filled with 1000 g Akulon K222-KGV4 nylon-6. The pellets are white (F8.04.81.LP) and contain in addition to the white pigment (TiO₂) glass fibers and flame retardant. The pellets are heated to 130 °C and after this temperature is reached 25 grams of coating dispersion is added. A small flow of nitrogen is led in the drum in order to prevent degradation of the polyamide. The coating dispersion is prepared by mixing 1.00-gram dye (Marcolex Red EG, Sandoplast Orange 3G or Macrolex Blue ER) and 2.50 grams Aquazol 200 (Polymer Chemistry Innovations Inc.) in 21.5 g water with an ultraturrax T25 rotor-stator mixer.

After 10 minutes mixing the Eirich is emptied and the coated pellets are collected in a metal container.

### Example 2

Example 1 has been repeated with PVP K30 instead of Aquazol 200.

### Comparative experiment I

An aero coater Strea-1 was filled with 1000 grams Akulon K123 and the pellets were heated with inlet air of 65 °C (140 m³/h). The outlet temperature was adjusted at 45 °C by spraying water. After stabilization of the temperatures the coating dispersion was applied within about 15 minutes.

### Comparative experiments II-VI

A Diosna high-speed blender was filled with 4 kg Akulon K123 nylon-6 pellets and the pellets were heated to 130 °C. Subsequently a hot mixture containing 30.0 g molten wax, 20.0 g white pigment (TiO₂) and 4.0 g black pigment (Black pearls 880) is added to the mixture and mixed for 10 minutes at 1000 rpm. With Hoechst Wachs PP230 binder also a dispersion / solution of 5 grams Macrolex blue RB in 20 grams wax has been coated on 4 kg nylon 6. The pigment mixtures were prepared in a Haake blender. The following waxes have been tested;
Calcium stearate, LDPE wax, Erucamide, Acrawax C and Hoechst Wachs PP230.

After 10 minutes coating the blender was cooled and at 70 °C product temperature emptied.

Results of examples 1-2 and comparative experiments I-VI are compiled in table 1.

**Table 1. Effect of various binders on the coating process of nylon 6 pellets, on the strength of the coated pellets, and on the test plates after molding the pellets.**

| Example | Binder | Fouling | Ease of cleaning | Repeated cycles | Pellets | Molds |
|---|---|---|---|---|---|---|
| 1 | Aquazol 200 | Some fouling | Very easy with water | Possible | Good | Good |
| 2 | PVP K30 | fouling | Easy with water | Accumulation of fouling | Good | Good |
| Comparative experiment I | PVP K30 Aerocoater | Little fouling | Easy with water | Accumulation of fouling | Some rub-off of coating and chipping leads to some fines, mainly in filter of the coater | Good |
| Comp. Exp II | Ca Stearate | fouling | Difficult | Not tested | Rub-off of the coating | Good |
| Comp. Exp III | LDPE wax | fouling | Difficult | Not tested | Rub-off of the coating | Not tested |
| Comp. Exp IV | Erucamide | fouling | Difficult | Not tested | Rub-off of the coating, fines | Not tested |
| Comp. Exp. V | Acrawax C | fouling | Difficult | Not tested | Rub-off of the coating, fines | Good |
| Comp. Exp. VI | Hoechst PP230 | fouling | Difficult | Possible | Rub-off of the coating, fines | Good |

### Example 3

An amount of 1000 g of polycarbonate, Xanthar PC 24R, is heated in a wok and mixed with a spatula. Subsequently coating dispersions have been added and the water is removed by a hot air flow, generated with a hot air blower. After the color coating a topcoat with binder dispersion 1, 2, 3 and 4 has been applied. The temperature of the pellets before coating was about 140 °C.

Binder dispersion 1; 2.5003 g Macrolex yellow 6G, 6.18 g Neoxil 0010 binder ( DSM Resins, 40% polyurethane dispersion). Topcoat 3.11 g Neoxil 0010 binder
- Binder dispersion 2; 2.5001 g Macrolex yellow 6G, 8,01 g Neoxil 0208 binder (DSM Resins, 40% polypropylene wax dispersion). Topcoat 3.08 g Neoxil 0208
- Binder dispersion 3; 2.4998 g Macrolex yellow 6G, 3.00 g PVP K-90 solution in 42 g water. Topcoat 2.00 g PVP K-90 solution in 28 g water
- Binder dispersion 4; compound prepared on a twin-screw extruder containing 0.25% Macrolex yellow 6G in polycarbonate.

The materials have been dried and test-plates have been prepared by injection molding at standard conditions, 290 °C and at abuse condition, 320 °C and 5 minutes residence time in the machine. The test plates are compared via visual inspection.

Binder dispersion 1 and 4 give perfect clear and transparent colored test plates. It is impossible to see a difference between 1 and 4.

The plate of in which binder dispersion 2 was used, is opaque and thus clearly different. Also the plate in which binder dispersion 3 is used, is slightly opaque. At abuse condition the plates of experiment 2 and 3 seem somewhat darkened and the turbidity somewhat increased.

### Example 4

A broad range of different colored test plates using 6 different color dispersions has been prepared. The white color was first dispersed in the resin from which Neoxil 0010 coating dispersion is made by emulsification. The emulsification process turned out to be possible with the TiO₂ present in the resin (50% m/m Tiona RL-91 in resin). The black dispersion was prepared by passing a dispersion of 50 grams black pearls 800 and 200 grams neoxil 0010 through a high pressure homogenizer at 400 bar. The dye dispersions have been prepared by homogenization of 20 grams dye in 80 grams water without using any dispersant.

The compositions of the pellets that have been made are given in table 2.

Both transparent and filled color plates can be prepared.

The colorants are good dispersed and distributed after molding.

Pellets with higher binder contents (13, 14 and 21) tend to stick during drying.
Sticking could be reduced by heating the samples or by a top coating with PVP.

**Table 2. Compositions as used for the preparation of coated polycarbonate pellets. The amount of binder and colorant was coated each time on 1000 grams polycarbonate.**

| | | Colorant (solids) | Neoxil 0010, including Neoxil in white and black dispersion | Top coating Neoxil 0010 |
|---|---|---|---|---|
| 1 | Transparent yellow | Y6G; 0,5003 g | 1,2334 g | 0,6025 g |
| 2 | Transparent red | REG ; 0,5038 g | 1,2119 g | 0,6069 g |
| 3 | Transparent blue | BRR ; 0,2557 g | 0,6297 g | 0,2951 g |
| 4 | Transparent green | GG ; 0,2582 g | 0,6190 g | 0,3012 g |
| 5 | Transparent orange | Y6G; 0,2498 g REG; 0,2878 g | 1,2158 g | 0,6244 g |
| 6 | Transparent green 2 | Y6G ; 0,2443 g | 0,9310 g | 0,4576 g |
| | | BRR; 0,1222 g | | |
| 7 | Transparent purple | BRR ; 0,1239 g REG ; 0,2504 g | 0,9190 g | 0,4713 g |
| 8 | Transparent sea green | BRR; 0,1233 g | 0,6084 g | 0,3269 g |
| | | GG ; 0,1228 g | | |
| 9 | Transparent light green | GG ; 0,1206 g | 0,9555 g | 0,4893 g |
| | | Y6G ; 0,2454 g | | |
| 10 | Transparent brown | REG; 0,2682 g | 0,9026 g | 0,4566 g |
| | | GG ; 0,1274 g | | |
| 11 | Dark blue | Ti02 ; 1,0089 g | 2,910 g | 2,884 g |
| | | BRR ; 1,26 g | | |
| 12 | Somewhat lighter blue | Ti02 ; 2,487 g | 3,037 g | 2,9082 g |
| | | BRR ; 1,2526 g | | |
| 13 | Blue | TiO2; 5,022 g | 5,022 g | 2,186 g |
| | | BRR ; 1,236 g | | |
| 14 | Blue | Ti02 ; 10,442 g | 10,442 g | 2,556 g |
| | | BRR ; 1,2834 g | | |
| 15 | Dark red | Ti02 ; 1,0491 g | 3,224 g | 3,069 g |
| | | REG; 2,122 g | | |
| 16 | Lighter red | TiO2; 2,0108 g | 4,234 g | 2,667 g |
| | | REG ; 2,119 g | | |
| 17 | Yellow | Ti02 ; 2,0336 g | 3,7898 g | 2,0605 g |
| | | Y6G ; 0,7212 g | | |
| 19 | Black | BP ; 1,662 g | 6,659 g | 2,981 g |
| 20 | Translucent white | TiO2 ; 1,0516 g | 2,5567 g | 1,2752 g |
| 21 | White* | TiO2 ; 10,10 g | 10,10 g | 1,1121 g |

Sample 21 has been investigated by electron microscopy.

In photograph 1 the distribution of TiO₂ colorant in the coating and in the polymer can be observed. Due to mutual mixing of the binder and the polymer there is not a sharp transition between the coating and the polymer. This results in very good adhesion.

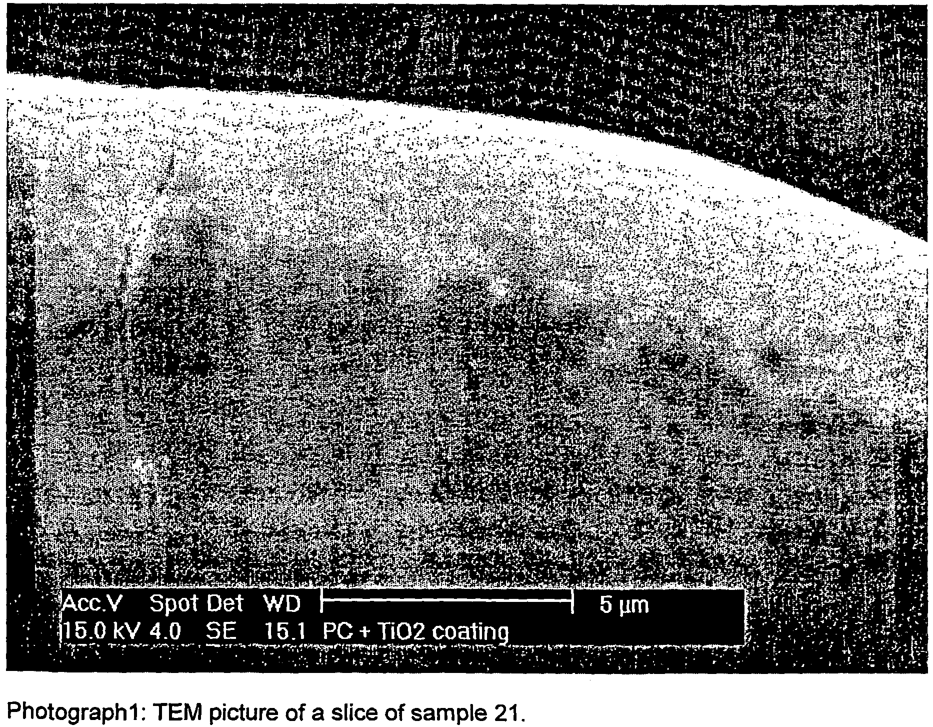

Coated polymer pellets of table 2 are placed in an aluminum cup and are hit with a hammer. The pellets can be flattened to disks without deposition of colorant on the aluminum or on the hammer.

### Example 5

An amount of 0.99 grams HP ultra talcum has been dispersed in 3.4 grams acetone in a small beaker in a Bransson ultrasonic bath. Subsequently 5.0 grams Neoxil 0010 and 50 grams water have been mixed in the dispersion.

This coating dispersion has been applied to 1000 grams Amitel KP31393550 (DSM EP) in a wok as explained in example 4. After drying this results in 1003 grams coated Arnitel. The talcum adheres very good to the surface and there is no dust / fines during handling of the pellets. After molding the talcum is good dispersed and distributed in the polymer.

### Example 6

In this example an amount of 5% pigment and 5 % binder are coated on nylon 6. Solutions of 100 grams PVP K15 and PVP K25 in 100 grams water have been prepared. Subsequently 100 grams red iron oxide pigment has been gradually added to each solution and dispersed. After most of the pigment was added it was getting difficult to disperse more pigment. At this point 2 droplets (about 0.1 ml) disperbyk 190 was added and the rest of the pigment. Both dispersions could be poured but the dispersion with PVP K25 is very viscous.

Amounts of 60 grams of above dispersions were added to 360 grams Akulon K123 pellets in a wok and mixed with a spatula. Subsequently the system was dried with hot air. In the case of the dispersion with PVP K15 dust is blown out of the wok after the pellets are dry. Also pieces of the coating are chipped of when particles are hit with a hammer. The fracture surface on the nylon is still red or partly red. In the case of PVP K25 there are no fines during the coating process other then some flakes that release of the surface of the wok. Some material chips of when the pellets are flattened with a hammer.

The PVP-K15 is very brittle due to its low molecular weight and mechanical forces result easily in attrition of fines.

### Example 7

A smaller amount of coating was applied by mixing 6 grams of the coating dispersions describes above and 54 grams of water. This time 396 grams Akulon K123 was coated in a wok with 60 grams diluted colorant leading to about 0.5 % colorant loading. Coated pellets turned out to be very robust in this case and no dust was formed during the coating process, even with PVP K15 binder.

The pellets could be flattened with a hammer without visible release of colorant.

### Example 8 and comparative experiments

Picture 2 is a photograph of 1 liter bottles that have been filled with 100 grams of coated pellets and are subsequently shaken violently by hand. Each bottle was shaken 100x back and forward.
A) Pellets of example 7 having 0.5 % pigment loading and 0.5% PVP K15
B) Comparative, pellets coated with 5% pigment and 5 % PVP-K15 coating.
C) Pellets according to sample 11 of Table 2 containing 0.126 % Macrolex Blue RG and 0.25 % Neoxil 0010 solids.
D) Comparative, pellets coated with 0.125 % Macrolex Blue RG and 0.5 % Hoechst Wachs PP230 coating

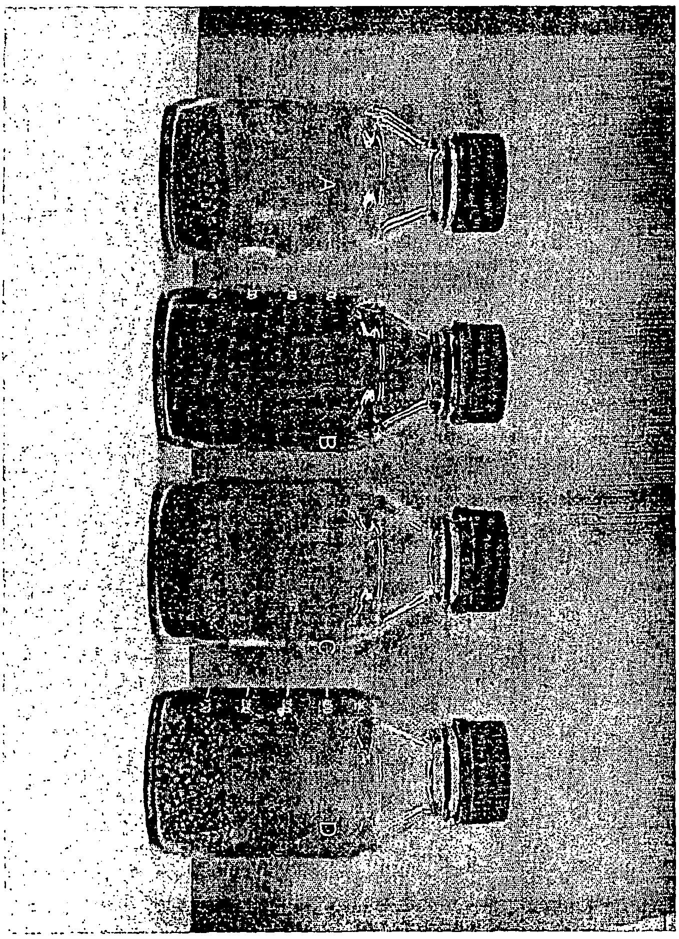

## Claims

1. Process for the coating of polymer particles, comprising
- contacting the particles with a composition comprising an additive, a film-forming binder that is miscible with the polymer, and a distributing agent,
- removing the distributing agent at a particle temperature at which the binder can form a film and that is below the softening temperature Tₚ of the polymer, and
- forming and consolidating an additive-containing layer of binder on the polymer particles,
the polymer particles being kept in mutual motion while they are being contacted with the composition, during removal of the distributing agent, and while the additive-containing layer of binder is being formed and consolidated. wherein miscibility is determined by mixing equal amounts of polymer and dried binder in the melt in a kneader or extruder; a sample of the resulting mixture is placed in a standard DSC pan and heated in a DSC apparatus at a heating rate of 10 °C per minute; if a single glass transition temperature peak is visible in the heating curve, situated between the corresponding values of the binder and the polymer by themselves, then the binder is considered to be miscible with the polymer;
If a polymer-binder combination cannot be considered to be miscible according to the above test, it can be subjected to the following test in which a quantity of a dispersion or solution of the binder as intended for use in the process according to the invention is mixed with an equal amount of polymer powder, for instance obtained by cryogenic milling, and placed in a DSC pan; next, the combined material is heated to Tₚ in a DSC apparatus, with evaporation of the distributing agent; binder and polymer are also considered to be miscible if the glass transition temperature of the binder, as measured in the second heating curve, has been increased due to the heating together with the polymer by at least 5% of the difference between the values of the glass transition temperature of the binder and the polymer by themselves.

2. Process according to claim 1, wherein the additive containing layer of binder forms a boundary layer with the polymer, said boundary layer having a thickness of at least 0.1 µm.

3. Process according to claims 1 or 2, wherein the polymer is a polyolefin, polystyrene, HIPS and ABS and the binder comprises an emulsion of modified polyolefin.

4. Process according to claims 1 or 2, wherein the polymer is a polyamide, polyester or a polyether and the binder comprises a polyoxazonline.

5. Process according to any one of claims 1 to 4, in which consolidation takes place by removing the distributing agent to the point at which the softening temperature T_{b} of the binder has increased to above the particle temperature.

6. Process according to any one of claims 1 to 5, in which the polymer is soluble in the binder.

7. Process according to any one of claims 1 to 6, in which the binder is reactive with itself or with the polymer.

8. Process according to any one of claims 1-7, in which the particle temperature during removal of the distributing agent is at least 5 °C below Tₚ.

9. Process according to any one of claims 1-8, in which the particle temperature during removal of the distributing agent is at least 5 °C above T_{b} but is lower than Tₚ.

10. Process according to any one of claims 1-9, in which the proportion of the sum of additive and binder relative to the total of additive, binder and polymer particles lies between 0.001 and 5 wt.%.

11. Process according to any one of claims 1-10, in which the binder is soluble in distributing agent.

12. Process according to any one of claims 1-11, in which the additive is incorporated in the binder and the binder is insoluble in the distributing agent.

13. Process for the preparation of additive-containing polymeric objects, in which polymer particles coated according to the process of any one of claims 1-12 are processed at a temperature that lies above the melting point of the polymer.

## Patentansprüche

1. Verfahren zum Beschichten von Polymerteilchen, umfassend
- das Inkontaktbringen der Teilchen mit einer Zusammensetzung, die ein Additiv, ein filmbildendes Bindemittel, das mit dem Polymer mischbar ist, und ein Verteilungsmittel umfasst,
- das Entfernen des Verteilungsmittels bei einer Teilchentemperatur, bei der das Bindemittel einen Film bilden kann und die unter der Erweichungstemperatur Tₚ des Polymers liegt, und
- das Bilden und Konsolidieren einer additivhaltigen Bindemittelschicht auf den Polymerteilchen,
wobei die Polymerteilchen während des Inkontaktbringens mit der Zusammensetzung, während des Entfernens des Verteilungsmittels und während des Bildens und Konsolidierens der additivhaltigen Bindemittelschicht in gegenseitiger Bewegung gehalten werden;
wobei die Mischbarkeit folgendermaßen bestimmt wird: gleiche Mengen von Polymer und getrocknetem Bindemittel werden in einem Kneter oder Extruder in der Schmelze gemischt; eine Probe der erhaltenen Mischung wird in ein Standard-DSC-Pfännchen gegeben und in einer DSC-Apparatur mit einer Aufheizrate von 10°C pro Minute erhitzt; wenn in der Aufheizkurve ein einziger Glasübergangstemperatur-Peak sichtbar ist, der zwischen den entsprechenden Werten für das Bindemittel und das Polymer für sich liegt, wird das Bindemittel als mit dem Polymer mischbar erachtet;
wenn eine Polymer-Bindemittel-Kombination gemäß dem obigen Test nicht als mischbar erachtet werden kann, kann sie dem folgenden Test unterworfen werden: eine Menge einer Dispersion oder Lösung des Bindemittels, wie sie zur Verwendung bei dem erfindungsgemäßen Verfahren vorgesehen ist, wird mit einer gleichen Menge Polymerpulver, das beispielsweise durch Kaltmahlen erhalten wurde, gemischt und in ein DSC-Pfännchen gegeben; danach wird das vereinigte Material in einer DSC-Apparatur auf Tₚ erhitzt, wobei das Verteilungsmittel verdampft; Bindemittel und Polymer werden ebenfalls als mischbar erachtet, wenn die Glasübergangstemperatur des Bindemittels, wie in der zweiten Aufheizkurve gemessen, infolge des gemeinsamen Erhitzens mit dem Polymer um mindestens 5% der Differenz zwischen den Werten der Glasübergangstemperatur des Bindemittels und des Polymers für sich angestiegen ist.

2. Verfahren nach Anspruch 1, wobei die additivhaltige Bindemittelschicht eine Grenzschicht mit dem Polymer bildet, wobei die Grenzschicht eine Dicke von mindestens 0,1 µm aufweist.

3. Verfahren nach Anspruch 1 oder 2, wobei es sich bei dem Polymer um ein Polyolefin, Polystyrol, HIPS und ABS handelt und das Bindemittel eine Emulsion von modifiziertem Polyolefin umfasst.

4. Verfahren nach Anspruch 1 oder 2, wobei es sich bei dem Polymer um ein Polyamid, einen Polyester oder einen Polyether handelt und das Bindemittel ein Polyoxazolin umfasst.

5. Verfahren nach einem der Ansprüche 1 bis 4, wobei das Konsolidieren durch Entfernen des Verteilungsmittels bis zu dem Punkt, an dem die Erweichungstemperatur T_{b} des Bindemittels bis über die Teilchentemperatur angestiegen ist, erfolgt.

6. Verfahren nach einem der Ansprüche 1 bis 5, wobei das Polymer in dem Bindemittel löslich ist.

7. Verfahren nach einem der Ansprüche 1 bis 6, wobei das Bindemittel mit sich selbst oder mit dem Polymer reaktiv ist.

8. Verfahren nach einem der Ansprüche 1-7, wobei die Teilchentemperatur während des Entfernens des Verteilungsmittels mindestens 5°C unter Tₚ liegt.

9. Verfahren nach einem der Ansprüche 1-8, wobei die Teilchentemperatur während des Entfernens des Verteilungsmittels mindestens 5°C über T_{b}, aber unter Tₚ liegt.

10. Verfahren nach einem der Ansprüche 1-9, wobei der Anteil der Summe von Additiv und Bindemittel, bezogen auf die Gesamtmenge von Additiv, Bindemittel und Polymerteilchen, zwischen 0,001 und 5 Gew.-% liegt.

11. Verfahren nach einem der Ansprüche 1-10, wobei das Bindemittel in dem Verteilungsmittel löslich ist.

12. Verfahren nach einem der Ansprüche 1-11, wobei das Additiv in das Bindemittel eingearbeitet ist und das Bindemittel in dem Verteilungsmittel unlöslich ist.

13. Verfahren zur Herstellung von additivhaltigen Polymergegenständen, bei dem man nach dem Verfahren gemäß einem der Ansprüche 1-12 beschichtete Polymerteilchen bei einer über dem Schmelzpunkt des Polymers liegenden Temperatur verarbeitet.

## Revendications

1. Procédé de revêtement de particules de polymère, comprenant
- la mise en contact des particules avec une composition comprenant un additif, un liant filmogène qui est miscible avec le polymère, et un agent de distribution,
- l'élimination de l'agent de distribution à une température des particules à laquelle le liant peut former un film et qui est inférieure à la température de ramollissement Tₚ du polymère, et
- la formation et la consolidation d'une couche de liant contenant l'additif sur les particules de polymère,
les particules de polymère étant maintenues en mouvement les unes par rapport aux autres pendant qu'elles sont mises en contact avec la composition, pendant l'élimination de l'agent de distribution, et pendant que la couche de liant contenant l'additif est formée et consolidée, dans lequel la miscibilité est déterminée par mélange de quantités égales de polymère et de liant séché dans la masse fondue dans une pétrisseuse ou une extrudeuse ; un échantillon du mélange résultant est placé dans une cuve de DSC standard et chauffé dans un appareil de DSC à une vitesse de montée en température de 10 °C par minute ; si un seul pic de température de transition vitreuse est visible dans la courbe de montée en température, situé entre les valeurs correspondantes du liant et du polymère seuls, alors le liant est considéré comme étant miscible avec le polymère ;
si une combinaison polymère-liant ne peut pas être considérée comme miscible selon le test ci-dessus, elle peut être soumise au test suivant dans lequel une quantité d'une dispersion ou solution du liant que l'on envisage d'utiliser dans le procédé selon l'invention est mélangée avec une quantité égale de poudre de polymère, obtenue par exemple par broyage cryogénique, et placée dans une cuve de DSC ; ensuite, le matériau combiné est chauffé à la Tₚ dans un appareil de DSC, avec évaporation de l'agent de distribution ; le liant et le polymère sont aussi considérés comme étant miscibles si la température de transition vitreuse du liant, mesurée dans la deuxième courbe de montée en température, s'est accrue, du fait du chauffage conjointement avec le polymère, d'au moins 5% de la différence entre les valeurs de la température de transition vitreuse du liant et du polymère seuls.

2. Procédé selon la revendication 1, dans lequel la couche de liant contenant l'additif forme une couche limite avec le polymère, ladite couche limite ayant une épaisseur d'au moins 0,1 µm.

3. Procédé selon les revendications 1 ou 2, dans lequel le polymère est une polyoléfine, du polystyrène, du HIPS et de l'ABS et le liant comprend une émulsion de polyoléfine modifiée.

4. Procédé selon les revendications 1 ou 2, dans lequel le polymère est un polyamide, un polyester ou un polyéther et le liant comprend une polyoxazoline.

5. Procédé selon l'une quelconque des revendications 1 à 4, dans lequel la consolidation a lieu par élimination de l'agent de distribution au moment où la température de ramollissement T_{b} du liant s'est élevée jusqu'à une valeur supérieure à la température des particules.

6. Procédé selon l'une quelconque des revendications 1 à 5, dans lequel le polymère est soluble dans le liant.

7. Procédé selon l'une quelconque des revendications 1 à 6, dans lequel le liant est réactif avec lui-même ou avec le polymère.

8. Procédé selon l'une quelconque des revendications 1-7, dans lequel la température des particules pendant l'élimination de l'agent de distribution est inférieure d'au moins 5 °C à la Tₚ.

9. Procédé selon l'une quelconque des revendications 1-8, dans lequel la température des particules pendant l'élimination de l'agent de distribution est supérieure d'au moins 5 °C à la T_{b} mais est inférieure à la Tₚ.

10. Procédé selon l'une quelconque des revendications 1-9, dans lequel la proportion entre la somme d'additif et de liant et le total des particules d'additif, de liant et de polymère se situe entre 0,001 et 5 % en poids.

11. Procédé selon l'une quelconque des revendications 1-10, dans lequel le liant est soluble dans l'agent de distribution.

12. Procédé selon l'une quelconque des revendications 1-11, dans lequel l'additif est incorporé dans le liant et le liant est insoluble dans l'agent de distribution.

13. Procédé de préparation d'objets polymères contenant un additif, dans lequel des particules de polymère revêtues selon le procédé de l'une quelconque des revendications 1-12 sont transformées à une température qui se situe au-dessus du point de fusion du polymère.
